# EUROPEAN PATENT SPECIFICATION

(11) **EP 2 252 683 B1**
(45) Date of publication and mention of the grant of the patent: **15.07.2015**
(21) Application number: 09710061.4
(22) Date of filing: 11.02.2009
(51) Int. Cl.: C11D 3/39

(54) **USE OF ACTIVATOR COMPLEXES TO ENHANCE LOWER TEMPERATURE CLEANING IN ALKALINE PEROXIDE CLEANING SYSTEMS**
VERWENDUNG VON AKTIVATORKOMPLEXEN ZUR VERBESSERUNG DER REINIGUNGSLEISTUNG VON ALKALISCHEN PEROXIDREINIGUNGSSYSTEMEN BEI KALTEN TEMPERATUREN
UTILISATION DE COMPLEXES ACTIVATEURS POUR AMÉLIORER UN NETTOYAGE À BASSE TEMPÉRATURE DANS DES SYSTÈMES DE NETTOYAGE AU PEOXYDE ALCALIN

(30) Priority: 11.02.2008 US 27605
(43) Date of publication of application: 24.11.2010
(73) Proprietor: Ecolab Inc., St. Paul, MN 55102 (US)
(72) Inventor: FERNHOLZ, Peter J., Burnsville Minnesota 55337 (US); RYTHER, Robert J., St. Paul Minnesota 55104 (US); ERICKSON, Anthony W., Golden Valley Minnesota 55416 (US); SMITH, Kim R., Woodbury Minnesota 55125 (US); MOHS, Thomas, R., Eagan MN 55122, (US)
(74) Representative: Michalski Hüttermann & Partner Patentanwälte mbB
(86) International application number: PCT/IB2009/050566
(87) International publication number: WO 2009/101588

(56) References cited:
- EP-A2- 0 237 111
- KR-A- 20010 022 109
- KR-A- 20010 072 730
- KR-A- 20060 126 531
- US-A1- 2005 148 480
- US-A1- 2005 183 744
- US-A1- 2006 046 945
- US-A1- 2006 113 506
- WIEPRECHT T ET AL: "TERPYRIDINE-MANGANESE COMPLEXES: A NEW CLASS OF BLEACH CATALYSTS FOR DETERGENT APPLICATIONS", JOURNAL OF SURFACTANTS AND DETERGENTS, SPRINGER, BERLIN, DE, vol. 7, no. 1, 1 January 2004 (2004-01-01) , pages 59-66, XP001214080, ISSN: 1097-3958, DOI: 10.1007/S11743-004-0289-7

## Description

### FIELD OF THE INVENTION

The present disclosure relates to methods for removing soils from hard surfaces by generating a gas on and in the soil, at reduced temperatures compared to conventional cleaning techniques.

### BACKGROUND

In many industrial applications, such as the manufacture of foods and beverages, hard surfaces commonly become contaminated with soils such as carbohydrate, proteinaceous, and hardness soils, food oil soils, fat soils, and other soils. Such soils can arise from the manufacture of both liquid and solid foodstuffs. Carbohydrate soils, such as cellulosics, monosaccharides, disaccharides, oligosaccharides, starches, gums and other complex materials, when dried, can form tough, hard to remove soils, particularly when combined with other soil components such as proteins, fats, oils, minerals, and others. The removal of such carbohydrate soils can be a significant problem. Similarly, other materials such as proteins, fats and oils can also form hard to remove soil and residues.

Food and beverage soils are particularly tenacious when they are heated during processing. Foods and beverages are heated for a variety of reasons during processing. For example, in dairy plants, dairy products are heated on a pasteurizer (e.g. HTST - high temperature short time pasteurizer or UHT - ultra high temperature pasteurizer) in order to pasteurize the dairy product. Also, many food and beverage products are concentrated or created as a result of evaporation.

Clean in place (CIP) cleaning techniques are a specific cleaning regimen adapted for removing soils from the internal components of tanks, lines, pumps and other process equipment used for processing typically liquid product streams such as beverages, milk, juices, etc. Clean in place cleaning involves passing cleaning solutions through the system without dismantling any system components. The minimum clean-in-place technique involves passing the cleaning solution through the equipment and then resuming normal processing. Any product contaminated by cleaner residue can be discarded.

Often clean in place methods involve a first rinse, the application of the cleaning solutions, and a second rinse with potable water followed by resumed operations. The process can also include any other contacting step in which a rinse, acidic or basic functional fluid, solvent or other cleaning component such as hot water, cold water, etc. can be contacted with the equipment at any step during the process. Often the final potable water rinse is skipped in order to prevent contamination of the equipment with bacteria following the cleaning and/or sanitizing step. Conventional clean in place methods require high temperatures, e.g., above 80°C. Thus, conventional clean in place techniques require the consumption of large amounts of energy and water.

What is needed therefore is an improved low temperature method for removing soils that are not easily removed using conventional cleaning techniques. It is against this background that the present invention has been made.

### SUMMARY OF THE INVENTION

The present invention relates to a method for removing soil from a surface using a clean in place process. The method includes applying to the surface a composition including: (i) an activator complex; (ii) a source of alkalinity; and (iii) an active oxygen source as defined in claim 1. The composition is applied to the surface at a temperature of between 5°C and 50°C.

The transition metal complex comprises a source of manganese ions. The source of manganese ions has an oxidation state selected from the group consisting of zero, two, three, four, seven and combinations thereof, in some embodiments. In other embodiments, the source of manganese ions is selected from the group consisting of manganese (II) sulfate, manganese (II) chloride, manganese (II) oxide, manganese (III) oxide, manganese (IV) oxide, manganese (II) acetate and mixtures thereof.

The source of manganese ions is complexed with a gluconate composition. The source of alkalinity can be selected from the group consisting of basic salts, amines, alkanol amines, carbonates, silicates and mixtures thereof. In some embodiments, the source of alkalinity comprises an alkali metal hydroxide. In other embodiments, the source of alkalinity comprises sodium hydroxide. In some embodiments, the pH of the composition is 11 to 14.

In some embodiments, the surface to be cleaned is selected from the group consisting of tanks, lines and processing equipment. In some embodiments, the processing equipment is selected from the group consisting of a pasteurizer, a homogenizer, a separator, an evaporator, a filter, a dryer, a membrane, a fermentation tank, a cooling tank, and combinations thereof.

In some embodiments, the composition is applied to the surface to be cleaned for between 10 minutes and 60 minutes. In other embodiments, the composition substantially degrades upon contact with a soil present on the surface to be cleaned.

In other embodiments, the composition comprises: (i) 50 to 200 parts per million activator complex; (ii) 0.25 wt% to 1.5wt% of the source of alkalinity; and (iii) 0.25 wt% to 1.0 wt % active oxygen source. In other embodiments, the composition further comprises an additional functional ingredient selected from the group consisting of a low foam surfactant, a builder, a buffer, an antimicrobial composition, and combinations thereof.

In some embodiments, the surfactant is selected from the group consisting of alcohol alkoxylates, linear alkyl benzene sulfantes, alcohol sulfonates amine oxides, alkyl phenol ethoxylates, polyethylene glycol esters, EO/PO block copolymers and mixtures thereof. In other embodiments, the composition comprises GRAS ingredients.

In other embodiments, the method of the present invention further comprises reapplying the composition after it has been applied to the surface to be cleaned, wherein an additional unused active oxygen source is added to reapplied composition. In some embodiments, the additional active oxygen source is added to the composition before the composition is reapplied to the surface. In other embodiments, the additional active oxygen source is added to the composition substantially simultaneous with the reapplication of the composition to the surface. In still yet other embodiments, the additional active oxygen source is added to the composition after the composition is reapplied to the surface.

In some aspects, the present invention relates to a method for cleaning a surface. The method comprises applying a pre-treatment solution to the surface for an amount of time sufficient to substantially penetrate a soil on the surface; and then applying an override solution to the surface, wherein there is no rinse step between the application of the pre-treatment solution, and the override solution. In some embodiments, the pre-treatment solution comprises an active oxygen source, and a source of alkalinity, and the override solution comprises an activator complex. In other embodiments, the pre-treatment solution comprises an activator complex, and a source of alkalinity, and the override solution comprises an active oxygen source. In still yet other embodiments, the pre-treatment solution comprises an active oxygen source, and an activator complex, and the override solution comprises a source of alkalinity.

### BRIEF DESCRIPTION OF THE DRAWINGS

Figure 1 is a photograph illustrating stainless steel panels before and after cleaning as described in Example 1.
Figure 2 is a photograph illustrating stainless steel panels after cleaning as described in Example 1.
Figure 3 is a graphical depiction of the average percent soil removal achieved at 20°C and 40° using various cleaning methods.
Figure 4 is a photograph illustrating stainless steel trays after cleaning as described in Example 3.

### DETAILED DESCRIPTION

In some aspects, the present invention provides methods for removing soils from a hard surface. The methods can be used in a clean in place process. The methods include applying a composition including an activator complex, a source of alkalinity and an active oxygen source to the surface to be cleaned. In some embodiments, the compositions can be at an alkaline pH, e.g., a pH of 11 to 14. The cleaning methods can be carried out at lower temperatures than those used in conventional cleaning methods, e.g., clean in place techniques. Without wishing to be bound by any particular theory, it is thought that the use of the selected activator complexes allows for the lowering of the cleaning temperature. It is thought that the activator complexes act as a catalyst for the active oxygen source to produce oxygen gas at lower temperatures than those temperatures at which the active oxygen source conventionally degrades to produce oxygen gas. In some embodiments, the use of an activator complex in combination with an active oxygen source allows for the production of oxygen gas in situ on and in a soil, and/or in solution. It is thought that the mechanical action of the oxygen gas generation aids in breaking up soils present on the contacted surfaces.

In some embodiments, the use of an activator complex in the methods of the present invention allows for the use of reduced levels of chemistry, e.g., an alkaline source and/or an active oxygen source, during cleaning. Thus, the methods of the present invention provide for reduced energy consumption, e.g., lower cleaning temperatures, and reduced chemical consumption.

So that the invention maybe more readily understood, certain terms are first defined.

As used herein, "weight percent," "wt-%," "percent by weight," "% by weight," and variations thereof refer to the concentration of a substance as the weight of that substance divided by the total weight of the composition and multiplied by 100. It is understood that, as used here, "percent," "%," and the like are intended to be synonymous with "weight percent," "wt-%," etc.

As used herein, the term "about" refers to variation in the numerical quantity that can occur, for example, through typical measuring and liquid handling procedures used for making concentrates or use solutions in the real world; through inadvertent error in these procedures; through differences in the manufacture, source, or purity of the ingredients used to make the compositions or carry out the methods; and the like. The term "about" also encompasses amounts that differ due to different equilibrium conditions for a composition resulting from a particular initial mixture. Whether or not modified by the term "about", the claims include equivalents to the quantities.

It should be noted that, as used in this specification and the appended claims, the singular forms "a," "an," and "the" include plural referents unless the content clearly dictates otherwise. Thus, for example, reference to a composition containing "a compound" includes a composition having two or more compounds. It should also be noted that the term "or" is generally employed in its sense including "and/or" unless the content clearly dictates otherwise.

As used herein, the term "cleaning" refers to a method used to facilitate or aid in soil removal, bleaching, microbial population reduction, and any combination thereof.

In some aspects, the methods of the present invention apply to equipment generally cleaned using clean in place cleaning procedures. Examples of such equipment include evaporators, heat exchangers (including tube-in-tube exchangers, direct steam injection, and plate-in-frame exchangers), heating coils (including steam, flame or heat transfer fluid heated) re-crystallizers, pan crystallizers, spray dryers, drum dryers, and tanks.

The methods of the present invention can be used in any application where thermally degraded soils, i.e., caked on soils or burned on soils, such as proteins or carbohydrates, need to be removed. As used herein, the term "thermally degraded soil" refers to a soil or soils that have been exposed to heat and as a result have become baked on to the surface to be cleaned. Exemplary thermally degraded soils include food soils that have been heated during processing, e.g., dairy products heated on pasteurizers, fructose, or corn syrup.

The methods of the present invention can also be used to remove other non-thermally degraded soils that are not easily removed using conventional cleaning techniques. Soil types suited to cleaning with the methods of the present invention include, but are not limited to, starch, cellulosic fiber, protein, simple carbohydrates and combinations of any of these soil types with mineral complexes. Examples of specific food soils that are effectively removed using the methods of the present invention include, but are not limited to, vegetable and fruit juices, brewing and fermentation residues, soils generated in sugar beet and cane processing, and soils generated in condiment and sauce manufacture, e.g., ketchup, tomato sauce, barbeque sauce. These soils can develop on heat exchange equipment surfaces and on other surfaces during the manufacturing and packaging process.

Exemplary industries in which the methods of the present invention can be used include, but are not limited to: the food and beverage industry, e.g., the dairy, cheese, sugar, and brewery industries; oil processing industry; industrial agriculture and ethanol processing; and the pharmaceutical manufacturing industry.

Conventional CIP processing is generally well-known. The process includes applying a dilute solution (typically 0.5-3%) onto the surface to be cleaned. The solution flows across the surface (3 to 6 feet/second), slowly removing the soil. Either new solution is re-applied to the surface, or the same solution is recirculated and re-applied to the surface.

A typical CIP process to remove a soil (including organic, inorganic or a mixture of the two components) includes at least three steps: an alkaline solution wash, an acid solution wash, and then a fresh water rinse. The alkaline solution softens the soils and removes the organic alkaline soluble soils. The subsequent acid solution removes mineral soils left behind by the alkaline cleaning step. The strength of the alkaline and acid solutions and the duration of the cleaning steps are typically dependent on the durability of the soil. The water rinse removes any residual solution and soils, and cleans the surface prior to the equipment being returned on-line.

Unlike conventional CIP techniques, the methods of the present invention provide for enhanced soil removal at reduced temperatures, e.g., 10°C to 50°C. The methods of the present invention also provide for a reduction in the amount of chemistry and water consumed during the cleaning process. Thus, the methods of the present invention provide both energy and water savings, while achieving effective soil removal.

### Compositions

In some aspects, the methods of the present invention include applying a composition including at least one of an activator complex, a source of alkalinity and an active oxygen source to the surface to be cleaned. In some embodiments, the compositions for use with the methods of the present invention are at an alkaline pH, e.g., 11 to 14. In some embodiments, all three components can be applied to the surface to be cleaned as part of one composition. In other embodiments, the activator complex and the source of alkalinity can be applied to the surface as part of one composition and the active oxygen source can be applied as part of another separate composition. In still yet other embodiments, the active oxygen source and the activator complex can be applied to the surface as part of one composition, and the source of alkalinity can be applied to the surface as part of another separate composition. The activator complex, the source of alkalinity and the active oxygen source can be applied in any combination, and in any stepwise order, to the surface to be cleaned.

### Activator Complex

The present invention provides a method for cleaning a surface including applying an activator complex to a surface. As used herein the term "activator complex" or "activation complex" refers to a composition capable of reacting with an active oxygen source and/or a soil to enhance production of oxygen gas in situ on and in the soil. Without wishing to be bound by any particular theory, it is thought that the activator complex acts as a catalyst for oxygen gas generation during cleaning. That is, it is thought that the activator complex degrades an active oxygen source to generate oxygen gas in situ on and in the soil, during cleaning, without being degraded itself.

Activator complexes for use in the present invention are limited to, transition metal complexes. The activator complex, or complexes, selected is dependent on a variety of factors including, for example, the active oxygen source selected, the surface to be cleaned, and the amount and type of soil to be removed.

The activator complex is an alkaline stable transition metal complex. As used herein the term "alkaline stable transition metal complex" refers to a complex including a transition metal that is does not substantially degrade under alkaline conditions. The alkaline stable transition metal complex includes a source of manganese ions.

The source of manganese ions can have an oxidation state of +2, +3, +4, +6 or +7. In other embodiments, the source of manganese ions has an oxidation state of +2, +3, +4, or +7. Exemplary sources of manganese ions include, but are not limited to, manganese (II) sulfate, manganese (II) chloride, manganese (II) oxide, manganese (III) oxide, manganese (IV) oxide, manganese (II) acetate and combinations thereof. Other exemplary sources of manganese ions suitable for use in the methods of the present invention include those described in European Patent Nos. 0458397, 0458398, and 0549271, as well as those described in US Patent No. 5,246,621. Manganese ion sources that are generally recognized as safe (GRAS) for direct food contact can be used with the methods of the present invention.

The activator complex can be present in any form suitable for use with the methods of the present invention. For example, in some embodiments the activator complex is included as part of an aqueous solution applied to the surface. The activator complex can also be used in the form of a solid. For example, in some embodiments, the activator complex includes a solid block of a transition metal complex. A solution, e.g., a solution including an active oxygen source, can be run, e.g., poured, or sprayed, over the block. As the solution washes over the block, the transition metal complex in the block activates the active oxygen source in the solution. The resulting activated solution can then be applied the selected surface. For example, the resulting activated solution can be used in a CIP process to clean a surface.

In some embodiments, the activator complex can be delivered to the surface to be cleaned as part of the source of alkalinity. For example, the source of alkalinity can be included an alkaline solution, and an activator complex can be formulated such that it is a component of the alkaline solution. Methods for enhancing the alkaline stability of an activator complex include, but are not limited to, encapsulating the activator complex, and/or using alkaline stable complexing agents with the activator complex. Exemplary alkaline stable complexing agents include, but are not limited to sodium gluconate.

Without wishing to be bound by any particular theory, it is thought that the activator complex for use with the methods of the present invention facilities and enhances the ability to clean surfaces at reduced temperatures, e.g., between 10°C and 50°C. That is, the use of an activator complex allows for oxygen gas production on and in the soil to be removed without the use of high heat. Further, the activator complex aids in the production of oxygen gas at an alkaline pH.

Such oxygen production aids in facilitating soil removal by generating mechanical action on and in the soil, in addition to the normal bleaching and cleaning action of an oxygen producing source. It is thought that the active oxygen source penetrates the soil. When the active oxygen source within the soil is contacted by the activator complex, oxygen gas is produced within the soil. As the oxygen gas is being produced, it breaks up the soil from within. As an aqueous solution is passed over or through the surface, the broken up soil is washed away.

Without wishing to be bound by any particular theory, it is thought that compositions including activator complexes and active oxygen sources are also activated upon contact with a soil. That is, although some bubbling and gas generation may occur when an activator complex contacts an active oxygen source, when the compositions including an activator complex and an active oxygen source contact a soil the amount of bubbling and oxygen gas generated substantially increases. This increased gas generation upon contact with a soil may be due in part to the soil providing nucleation sites for the active oxygen source and/or the activator complex. It may also be due to the presence of electrons in the soil, which may cause the activator complex to act as a catalyst and recycle itself.

The amount of activator complex used in the methods of the present invention is dependent on a variety of factors including, the active oxygen source used, the type of surface to be cleaned, and the amount and type of soil present on the surface. The amount of activator complex used is also dependent on the size the particular activator complex chosen.

In some embodiments, the amount of activator complex applied is 0.0001 wt% to 1.0 wt% of the composition in which it is applied to the surface. Acceptable levels of activator complex present are 0.005 wt% to 0.02 wt%; 0.01 wt% is a particularly suitable level. It is to be understood that all values and ranges between these values and ranges are encompassed by the methods of the present invention.

In some embodiments, the amount of activator complex added will be such that the production of oxygen from the reaction between the activator complex and the active oxygen source is controlled over time. This is particularly desirable when cleaning surfaces using a clean in place method so as to not damage the surface or the equipment due to large amounts of oxygen gas production. In some embodiments, the concentration of the activator complex added is varied to provide a controlled release of oxygen gas on the surface to be cleaned.

In some embodiments, the reaction rate between the activator complex, and the active oxygen source, and/or the soil, can be controlled. Certain compounds and compositions can be used to increase the activity of the activator complex, e.g., increase the amount of oxygen gas generated. Exemplary promoters of the activator complex include, but are not limited to, silver, silver containing compounds, iron, and iron containing compounds.

Certain compounds and compositions can also be used to reduce the activity of the activator complex, e.g., decrease the amount of oxygen gas generated. Exemplary activity reducers include, for example, ethylenedinitrilotetraacetic acid (EDTA).

### Active Oxygen Source

In some embodiments, the compositions for use with the methods of the present invention include an active oxygen source. As used herein, the term "active oxygen source," refers to any composition capable of generating oxygen gas in situ on and in a soil, as well as in solution. In some embodiments, the active oxygen source is a compound capable of providing oxygen gas in situ on and in the soil upon contact with an activator complex. The compound can be organic, or inorganic.

Exemplary active oxygen sources for use in the methods of the present invention include, but are not limited to, peroxygen compounds, chlorites, bromates, iodates, permanganates, nitrates, nitric acid, borates, perborates, and gaseous oxidants such as ozone, oxygen, chlorine dioxide and derivatives thereof. In some embodiments, the active oxygen source does not include a chlorine containing group. Without wishing to be bound by any particular theory, it is thought that reaction of the active oxygen source with the soil and/or the activator complex creates vigorous mechanical action on and within the soil due to the oxygen gas released. The mechanical action can break up the soil from within. It is thought that this mechanical action enhances removal of the soil beyond that caused by the chemical and bleaching action of the active oxygen source alone.

In some embodiments, the active oxygen source includes at least one peroxygen compound. Peroxygen compounds including, but not limited to, peroxides and various percarboxylic acids, including percarbonates, can be used in the methods of the present invention. Peroxycarboxylic (or percarboxylic) acids generally have the formula R(CO₃H)ₙ, where, for example, R is an alkyl, arylalkyl, cycloalkyl, aromatic, or heterocyclic group, and n is one, two, or three, and named by prefixing the parent acid with peroxy. The R group can be saturated or unsaturated as well as substituted or unsubstituted. Medium chain peroxycarboxylic (or percarboxylic) acids can have the formula R(CO₃H)ₙ, where R is a C₅-C₁₁ alkyl group, a C₅-C₁₁ cycloalkyl, a C₅-C₁₁ arylalkyl group, C₅-C₁₁ aryl group, or a C₅-C₁₁ heterocyclic group; and n is one, two, or three. Short chain perfatty acids can have the formula R(CO₃H)ₙ where R is C₁-C₄ and n is one, two, or three.

Exemplary peroxycarboxylic acids for use with the present invention include, but are not limited to, peroxypentanoic, peroxyhexanoic, peroxyheptanoic, peroxyoctanoic, peroxynonanoic, peroxyisononanoic, peroxydecanoic, peroxyundecanoic, peroxydodecanoic, peroxyascorbic, peroxyadipic, peroxycitric, peroxypimelic, or peroxysuberic acid, and mixtures thereof.

Branched chain peroxycarboxylic acids include peroxyisopentanoic, peroxyisononanoic, peroxyisohexanoic, peroxyisoheptanoic, peroxyisooctanoic, peroxyisonananoic, peroxyisodecanoic, peroxyisoundecanoic, peroxyisododecanoic, peroxyneopentanoic, peroxyneohexanoic, peroxyneoheptanoic, peroxyneooctanoic, peroxyneononanoic, peroxyneodecanoic, peroxyneoundecanoic, peroxyneododecanoic, and mixtures thereof.

Additional exemplary peroxygen compounds for use with the methods of the present invention include hydrogen peroxide (H₂O₂), peracetic acid, peroctanoic acid, a persulphate, a perborate, or a percarbonate. In some embodiments, the active oxygen source includes hydrogen peroxide.

In some embodiments, compositions for use in the methods of the present invention include at least one active oxygen source. In other embodiments, compositions for use in the methods of the present invention include at least two, at least three, or at least four active oxygen sources. For example, combinations of active oxygen sources for use with the methods of the present invention can include, but are not limited to, peroxide/peracid combinations, or peracid/peracid combinations. In other embodiments, the active oxygen use source includes a peroxide/acid or a peracid/acid composition.

Active oxygen sources include commercially available active oxygen sources and/or active oxygen sources that can be generated on site.

The amount of active oxygen source present is dependent on a variety of factors including, for example, the type of surface to be cleaned, and the amount and type of soil present on the surface. In some embodiments, the amount of active oxygen source present is between 0.05 wt% and 5 wt%. Acceptable levels of active oxygen source present are 0.05 wt% to 0.25 wt%, or .25 wt% to 1.0 wt%; 0.15 w-% is a particularly suitable level.

### Alkalinity Source

In some aspects, the cleaning compositions for use with the methods of the present invention include a source of alkalinity. Exemplary alkaline sources suitable for use with the methods of the present invention include, but are not limited to, basic salts, amines, alkanol amines, carbonates and silicates. Other exemplary alkaline sources for use with the methods of the present invention include NaOH (sodium hydroxide), KOH (potassium hydroxide), TEA (triethanol amine), DEA (diethanol amine), MEA (monoethanolamine), sodium carbonate, and morpholine, sodium metasilicate and potassium silicate. The alkaline source selected can be compatible with the surface to be cleaned.

The amount of alkaline source present is dependent on a variety of factors including, for example, the type of surface to be cleaned, and the amount and type of soil present on the surface. In some embodiments, the amount of alkaline source present is 0.05 wt% to 10 wt%. Suitable levels of alkaline include 0.05 to 1.5 wt% and 0.75 to 1.0 wt%.

### Additional Ingredients

In some embodiments, the compositions for use with the methods of the present invention include additional ingredients. In some embodiments, the additional ingredients can facilitate soil removal from the surface to be cleaned. Additional ingredients for use with the methods of the present invention include, for example, penetrants, surfactants, builders, antimicrobial agents and buffers.

### Penetrants

In some aspects, a penetrant may be used with the methods of the present invention. The penetrant may be combined with an alkaline source in the cleaning composition, or, the penetrant may be used without an alkaline source. In some embodiments, the penetrant is water miscible.

Examples of suitable penetrants include, but are not limited to, alcohols, short chain ethoxylated alcohols and phenol (having 1-6 ethoxylate groups). Organic solvents are also suitable penetrants. Examples of suitable organic solvents, for use as a penetrant, include esters, ethers, ketones, amines, and nitrated and chlorinated hydrocarbons.

Ethoxylated alcohols are also suitable for use with the methods of the present invention. Examples of ethoxylated alcohols include, but are not limited to, alky, aryl, and alkylaryl alkloxylates. These alkloxylates can be further modified by capping with chlorine-, bromine-, benzyl-, methyl-, ethyl-, propyl-, butyl- and alkyl-groups. Ethoxylated alcohols can be present in the cleaning composition from 0.1 wt% to 20 wt%.

Fatty acids are also suitable for use as penetrants in the methods of the present invention. Some non-limiting examples of fatty acids are C₆ to C₁₂ straight or branched fatty acids. In some embodiments, fatty acids used in the methods of the present invention are liquid at room temperature.

In some embodiments, a penetrant for use in the methods of the present invention includes water soluble glycol ethers. Examples of glycol ethers include dipropylene glycol methyl ether (available under the trade designation DOWANOL DPM from Dow Chemical Co.), diethylene glycol methyl ether (available under the trade designation DOWANOL DM from Dow Chemical Co.), propylene glycol methyl ether (available under the trade designation DOWANOL PM from Dow Chemical Co.), and ethylene glycol monobutyl ether (available under the trade designation DOWANOL EB from Dow Chemical Co.). In some embodiments, a glycol ether is present in an amount of from 1.0 wt% to 20 wt-%.

### Surfactants

A surfactant or mixture of surfactants can be used in the methods of the present invention. The surfactant chosen can be compatible with the surface to be cleaned. A variety of surfactants can be used, including anionic, nonionic, cationic, and zwitterionic surfactants, which are commercially available from a number of sources. Suitable surfactants include nonionic surfactants, for example, low foaming non-ionic surfactants. For a discussion of surfactants, see Kirk-Othmer, Encyclopedia of Chemical Technology, Third Edition, volume 8, pages 900-912.

Nonionic surfactants suitable for use in the methods of the present invention include, but are not limited to, those having a polyalkylene oxide polymer as a portion of the surfactant molecule. Exemplary nonionic surfactants include, but are not limited to, chlorine-, benzyl-, methyl-, ethyl-, propyl-, butyl- and other like alkyl-capped polyethylene and/or polypropylene glycol ethers of fatty alcohols; polyalkylene oxide free nonionics such as alkyl polyglycosides; sorbitan and sucrose esters and their ethoxylates; alkoxylated ethylene diamine; carboxylic acid esters such as glycerol esters, polyoxyethylene esters, ethoxylated and glycol esters of fatty acids; carboxylic amides such as diethanolamine condensates, monoalkanolamine condensates, polyoxyethylene fatty acid amides; and ethoxylated amines and ether amines commercially available from Tomah Corporation and other like nonionic compounds. Silicone surfactants such as the ABIL B8852 (Goldschmidt) can also be used.

Additional exemplary nonionic surfactants suitable for use in the methods of the present invention, include, but are not limited to, those having a polyalkylene oxide polymer portion include nonionic surfactants of C6-C24 alcohol ethoxylates (e.g., C6-C14 alcohol ethoxylates) having 1 to 20 ethylene oxide groups (e.g., 9 to 20 ethylene oxide groups); C6-C24 alkylphenol ethoxylates (e.g., C8-C10 alkylphenol ethoxylates) having 1 to 100 ethylene oxide groups (e.g., 12 to 20 ethylene oxide groups); C6-C24 alkylpolyglycosides (e.g., C6-C20 alkylpolyglycosides) having 1 to 20 glycoside groups (e.g., 9 to 20 glycoside groups); C6-C24 fatty acid ester ethoxylates, propoxylates or glycerides; and C4-C24 mono or dialkanolamides.

Exemplary alcohol alkoxylates include, but are not limited to, alcohol ethoxylate propoxylates, alcohol propoxylates, alcohol propoxylate ethoxylate propoxylates, alcohol ethoxylate butoxylates; nonylphenol ethoxylate, polyoxyethylene glycol ethers; and polyalkylene oxide block copolymers including an ethylene oxide/propylene oxide block copolymer such as those commercially available under the trademark PLURONIC (BASF-Wyandotte).

Examples of suitable low foaming nonionic surfactants also include, but are not limited to, secondary ethoxylates, such as those sold under the trade name TERGITOL™, such as TERGITOL™ 15-S-7 (Union Carbide), Tergitol 15-S-3, Tergitol 15-S-9 and the like. Other suitable classes of low foaming nonionic surfactants include alkyl or benzyl-capped polyoxyalkylene derivatives and polyoxyethylene/polyoxypropylene copolymers.

An additional useful nonionic surfactant is nonylphenol having an average of 12 moles of ethylene oxide condensed thereon, it being end capped with a hydrophobic portion including an average of 30 moles of propylene oxide. Silicon-containing defoamers are also well-known and can be employed in the methods of the present invention.

Suitable amphoteric surfactants include, but are not limited to, amine oxide compounds having the formula: 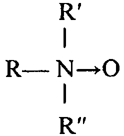 where R, R', R", and R"' are each a C₁-C₂₄ alkyl, aryl or arylalkyl group that can optionally contain one or more P, O, S or N heteroatoms.

Another class of suitable amphoteric surfactants includes betaine compounds having the formula: 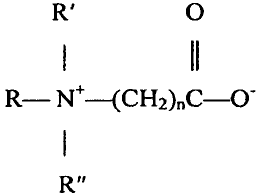 where R, R', R" and R"' are each a C₁-C₂₄ alkyl, aryl or aralkyl group that can optionally contain one or more P, O, S or N heteroatoms, and n is 1 to 10.

Suitable surfactants may also include food grade surfactants, linear alkylbenzene sulfonic acids and their salts, and ethylene oxide/propylene oxide derivatives sold under the Pluronic™ trade name. Suitable surfactants include those that are compatible as an indirect or direct food additive or substance.

Anionic surfactants suitable for use with the disclosed methods may also include, for example, carboxylates such as alkylcarboxylates (carboxylic acid salts) and polyalkoxycarboxylates, alcohol ethoxylate carboxylates, nonylphenol ethoxylate carboxylates, and the like; sulfonates such as alkylsulfonates, alkylbenzenesulfonates, alkylarylsulfonates, sulfonated fatty acid esters, and the like; sulfates such as sulfated alcohols, sulfated alcohol ethoxylates, sulfated alkylphenols, alkylsulfates, sulfosuccinates, alkylether sulfates, and the like; and phosphate esters such as alkylphosphate esters, and the like. Exemplary anionics include, but are not limited to, sodium alkylarylsulfonate, alpha-olefin sulfonate, and fatty alcohol sulfates. Examples of suitable anionic surfactants include sodium dodecylbenzene sulfonic acid, potassium laureth-7 sulfate, and sodium tetradecenyl sulfonate.

In some embodiments, the surfactant includes linear alkyl benzene sulfonates, alcohol sulfonates, amine oxides, linear and branched alcohol ethoxylates, alkyl polyglucosides, alkyl phenol ethoxylates, polyethylene glycol esters, EO/PO block copolymers and combinations thereof.

In some embodiments, the amount of surfactant in the cleaning composition is 0.0001 wt% to 1.0 wt%. Acceptable levels of surfactant include 0.001 wt% to .1 wt%, or 0.002 wt% to 0.05 wt%. It is to be understood that all values and ranges between these values and ranges are encompassed by the methods of the present invention.

### Surfactant Compositions

The surfactants described herein can be used singly or in combination in the methods of the present invention. In particular, the nonionics and anionics can be used in combination. The semi-polar nonionic, cationic, amphoteric and zwitterionic surfactants can be employed in combination with nonionics or anionics. The above examples are merely specific illustrations of the numerous surfactants which can find application within the scope of this invention. It should be understood that the selection of particular surfactants or combinations of surfactants can be based on a number of factors including compatibility with the surface to be cleaned at the intended use concentration and the intended environmental conditions including temperature and pH.

In addition, the level and degree of foaming under the conditions of use and in subsequent recovery of the composition can be a factor for selecting particular surfactants and mixtures of surfactants. For example, in certain applications it may be desirable to minimize foaming and a surfactant or mixture of surfactants that provides reduced foaming can be used. In addition, it may be desirable to select a surfactant or a mixture of surfactants that exhibits a foam that breaks down relatively quickly so that the composition can be recovered and reused with an acceptable amount of down time. In addition, the surfactant or mixture of surfactants can be selected depending upon the particular soil that is to be removed.

It should be understood that the compositions for use with the methods of the present invention need not include a surfactant or a surfactant mixture, and can include other components. In addition, the compositions can include a surfactant or surfactant mixture in combination with other components. Exemplary additional components that can be provided within the compositions used in the methods of the present invention include builders, water conditioning agents, non-aqueous components, adjuvants, carriers, processing aids, enzymes, and pH adjusting agents.

### Builders

In some embodiments, compositions for use with the methods of the present invention include a builder or builders. Builders include chelating agents (chelators), sequestering agents (sequestrants), detergent builders, and the like. The builder often stabilizes the composition or solution. Builders suitable for use with the methods of the present invention preferably do not complex with the activator complex. That is, the builder or builders for use with the present invention are selected such that they preferentially complex with the mineral soil broken up after the oxygen gas has been generated in situ on and in the soil, rather than with the activator complex.

Builders and builder salts can be inorganic or organic. Examples of builders suitable for use with the methods of the present invention include, but are not limited to, phosphonic acids and phosphonates, phosphates, aminocarboxylates and their derivatives, pyrophosphates, polyphosphates, ethylenediamene and ethylenetriamene derivatives, hydroxyacids, and mono-, di-, and tri-carboxylates and their corresponding acids. Other builders include aluminosilicates, nitroloacetates and their derivatives, and mixtures thereof. Still other builders include aminocarboxylates, including salts of hydroxyethylenediaminetetraacetic acid (HEDTA), and diethylenetriaminepentaacetic acid.

Exemplary commercially available chelating agents for use with the methods of the present invention include, but are not limited to: sodium tripolyphosphate available from Innophos; Trilon A® available from BASF; Versene 100®, Low NTA Versene ®, Versene Powder®, and Versenol 120® all available from Dow; Dissolvine D-40 available from BASF; and sodium citrate.

In some embodiments, a biodegradable aminocarboxylate or derivative thereof is present as a builder in the methods of the present invention. Exemplary biodegradable aminocarboxylates include, but are not limited to: Dissolvine GL-38® and Dissolvine GL-74 ® both available from Akzo; Trilon M® available from BASF; Baypure CX100® available from Bayer; Versene EDG® available from Dow; HIDS® available from Nippon Shakubai; Octaquest E30® and Octaquest A65® both available from Finetex/Innospec Octel.

In some embodiments, an organic chelating agent can be used. Organic chelating agents include both polymeric and small molecule chelating agents. Organic small molecule chelating agents are typically organocarboxylate compounds or organophosphate chelating agents. Polymeric chelating agents commonly include polyanionic compositions such as polyacrylic acid compounds. Small molecule organic chelating agents include N-hydroxyethylenediaminetriacetic acid (HEDTA), ethylenediaminetetraacetic acid (EDTA), nitrilotriaacetic acid (NTA), diethylenetriaminepentaacetic acid (DTPA), ethylenediaminetetraproprionic acid triethylenetetraaminehexaacetic acid (TTHA), and the respective alkali metal, ammonium and substituted ammonium salts thereof. Aminophosphonates are also suitable for use as chelating agents with the methods of the invention and include ethylenediaminetetramethylene phosphonates, nitrilotrismethylene phosphonates, and diethylenetriamine-(pentamethylene phosphonate) for example. These aminophosphonates commonly contain alkyl or alkenyl groups with less than 8 carbon atoms.

Other suitable sequestrants include water soluble polycarboxylate polymers. Such homopolymeric and copolymeric chelating agents include polymeric compositions with pendant (-CO₂H) carboxylic acid groups and include polyacrylic acid, polymethacrylic acid, polymaleic acid, acrylic acid-methacrylic acid copolymers, acrylic-maleic copolymers, hydrolyzed polyacrylamide, hydrolyzed methacrylamide, hydrolyzed acrylamide-methacrylamide copolymers, hydrolyzed polyacrylonitrile, hydrolyzed polymethacrylonitrile, hydrolyzed acrylonitrile methacrylonitrile copolymers, or mixtures thereof. Water soluble salts or partial salts of these polymers or copolymers such as their respective alkali metal (for example, sodium or potassium) or ammonium salts can also be used. The weight average molecular weight of the polymers is from 4000 to 12,000. Preferred polymers include polyacrylic acid, the partial sodium salts of polyacrylic acid or sodium polyacrylate having an average molecular weight within the range of 4000 to 8000.

Preferred builders for use with the methods of the present invention are water soluble. Water soluble inorganic alkaline builder salts which can be used alone or in admixture with other builders include, but are not limited to, alkali metal or ammonia or substituted ammonium salts of carbonates, silicates, phosphates and polyphosphates, and borates. Water soluble organic alkaline builders which are useful in the present invention include alkanolamines and cyclic amines.

Particularly preferred builders include PAA (polyacrylic acid) and its salts, phosphonobutane carboxylic acid, HEDP (1-Hydroxyethylidene-1,1-Diphosphonic Acid), EDTA and sodium gluconate.

In some embodiments, the amount of builder present in the compositions for use with the methods of the present invention is 0.001 wt% to 5 wt%. In some embodiments, 0.005 wt% to 0.1 wt% of builder is present. Acceptable levels of builder include 0.05 wt% to 2.5 wt%.

### Optional Adjuvants

In addition, various other additives or adjuvants may be present in compositions of the present invention to provide additional desired properties, either of form, functional or aesthetic nature, for example:
a) Solubilizing intermediaries called hydrotropes can be present in the compositions of the invention of such as xylene-, toluene-, or cumene sulfonate; or n-octane sulfonate; or their sodium-, potassium- or ammonium salts or as salts of organic ammonium bases. Also commonly used are polyols containing only carbon, hydrogen and oxygen atoms. They preferably contain from 2 to 6 carbon atoms and from 2 to 6 hydroxy groups. Examples include 1,2-propanediol, 1,2-butanediol, hexylene glycol, glycerol, sorbitol, mannitol, and glucose.
b) Nonaqueous liquid carrier or solvents can be used for varying compositions for use with the methods of the present invention.
c) Viscosity modifiers may be added to the compositions for use with the methods of the present invention. These can include natural polysaccharides such as xanthan gum, carrageenan and the like; or cellulosic type thickeners such as carboxymethyl cellulose, and hydroxymethyl-, hydroxyethyl-, and hydroxypropyl cellulose; or, polycarboxylate thickeners such as high molecular weight polyacrylates or carboxyvinyl polymers and copolymers; or, naturally occurring and synthetic clays; and finely divided fumed or precipitated silica, to list a few. In some embodiments, the compositions for use with the methods of the present invention do not include a gelling agent.
d) Solidifiers may be used to prepare solid form of a composition for use with the methods of the present invention. These could include any organic or inorganic solid compound having a neutral inert character or making a functional, stabilizing or detersive contribution to the intended embodiment. Examples are polyethylene glycols or polypropylene glycols having molecular weight of from 1,400 to 30,000; and urea.

### Methods of Cleaning

In some aspects, the present invention provides methods for removing soil from a surface using a clean in place process. The method includes applying to the surface a composition including an activator complex, a source of alkalinity, and an active oxygen source. Additional ingredients may also be present in the composition. The activator complex, source of alkalinity, and active oxygen source can be applied to the surface in a variety of ways. For example, the activator complex, source of alkalinity, and active oxygen source can be applied to the surface as part of a single composition.

In other embodiments, the activator complex, source of alkalinity, and active oxygen source can be applied in a stepwise manner, e.g., one after the other, without a rinse step in between application of each of the components. In other embodiments, combinations of each of the components can be applied to the surface. For example, in some embodiments, the activator complex and active oxygen source are applied in a first step, and the source of alkalinity is applied in a second step, without a rinse step between the first and the second steps. In other embodiments, an active oxygen source and a source of alkalinity are applied to the surface in a first step, and an activator complex is applied to the surface in second step, without a rinse step between the first and the second steps.

In some embodiments, the methods of the present invention are followed by only a rinse step. The methods of the present invention do not require rinse steps in between application of the components of the compositions of the present invention. That is, when the activator complex, source of alkalinity, and active oxygen source are applied to a surface in a step-wise manner, the surface does not need to be rinsed in between each application step. Thus, the methods of the present invention provide for enhanced cleaning, while consuming less water than conventional clean in place cleaning techniques.

In other embodiments, the methods of the present invention are followed by a conventional CIP method suitable for the surface to be cleaned. In still yet other embodiments, the methods of the present invention are followed by a CIP method such as those described in US Patent Applications US2006/042665 and US2006/046945 entitled "Methods for Cleaning Industrial Equipment with Pre-treatment,".

In some embodiments, the methods of the present invention further include reapplying a composition to the surface or system to be cleaned, after the composition has been applied to the surface. For example, a composition is applied to a surface to be cleaned. After application, the used composition is collected, and reapplied to the surface to be cleaned. Additional, unused active oxygen source can be added to the used composition to re-activate the composition, producing oxygen gas. The additional unused active oxygen source can be added to the composition at any time, i.e., before, during or after the composition has been reapplied to the surface.

In some embodiments, the compositions for use with the methods of the present invention include ingredients that are characterized by the United States Food and Drug Administration as direct or indirect food additives. In some embodiments, the compositions include ingredients that are generally recognized as safe (GRAS) for direct food contact.

In some embodiments, the compositions for use with the present invention are substantially free of chlorine or chlorine containing compounds. As used herein, the term "substantially free of chlorine or chlorine containing compounds" refers to a composition, mixture, or ingredients that does not contain chlorine or to which only a limited amount of chlorine has been added. Should chlorine be present, the amount of chlorine shall be less than 1 wt%, less than 0.5 wt%, or less than 0.1 wt%.

### Surfaces

In some embodiments, the methods of the present invention are used on surfaces which are normally cleaned using a clean in place cleaning technique. Examples of such surfaces include evaporators, heat exchangers (including tube-in-tube exchangers, direct steam injection, and plate-in-frame exchangers), heating coils (including steam, flame or heat transfer fluid heated) re-crystallizers, pan crystallizers, spray dryers, drum dryers, and tanks.

Additional surfaces capable of being cleaned using the methods of the present invention include, but are not limited to membranes, medical devices, laundry and/or textiles, and hard surfaces, e.g., walls, floors, dishes, flatware, pots and pans, heat exchange coils, ovens, fryers, smoke houses, sewer drain lines, and vehicles. In some embodiments, the surfaces can be cleaned using a clean in place method. In other embodiments, the surfaces can be cleaned using a non-CIP method. The methods of the present invention can also be used to remove dust from air handling equipment, for example, from air conditioners and refrigeration heat exchangers. In other embodiments, the methods of the present invention can be used for drain line microbial control, e.g., to reduce or remove biofilm formation.

Exemplary industries in which the methods of the present invention can be used include, but are not limited to: the food and beverage industry, e.g., the dairy, cheese, sugar, and brewery industries; oil processing industry; industrial agriculture and ethanol processing; and the pharmaceutical manufacturing industry.

### Temperature

The methods of the present invention provide for soil removal from surfaces at reduced temperatures, e.g., from 5°C to 50°C, compared to conventional cleaning techniques, e.g., clean in place techniques. In some embodiments, the methods of the present invention provide for soil removal from surfaces at an ambient or room temperature, e.g., 18°C to 23°C. Without wishing to be bound by any particular theory, it is thought that the use of an activator complex in conjunction with an active oxygen source and a source of alkalinity allows for the generation of oxygen gas on and in a soil, without the use of heat activation.

The ability to clean at reduced temperatures results in energy and cost savings compared to traditional cleaning techniques that require increased temperatures. Further, the present invention provides for effective soil removal on surfaces that cannot withstand high temperatures.

It has also been found that the methods of the present invention provide for soil removal at reduced temperatures, and using reduced amounts of chemistry, compared to conventional cleaning methods, e.g., CIP cleaning methods. In some embodiments, the methods of the present invention use 25% to 50% less chemistry, e.g., source of alkalinity and/or active oxygen source, than conventional cleaning methods. Thus, the methods of the present invention can effectively remove soil at both low temperatures, and using a low concentration of chemicals, providing both an energy savings and a reduction in the amount of chemistry consumed per cleaning.

### Time

In some aspects of the invention, the compositions for use with the methods of the present invention are applied to the surface for a sufficient amount of time such that the composition penetrates into the soil to be removed. This penetration into the soil allows for oxygen gas generation to occur in the soil. Although the methods of the present invention are carried out at lower temperatures than conventional cleaning methods, the methods of the present invention do not require an increased cleaning time to achieve equal or better cleaning results than conventional cleaning methods.

In some aspects, a composition including at least one of an activator complex, an active oxygen source, and a source of alkalinity is applied to a surface for an amount of time sufficient to substantially remove a soil from the surface. In some embodiments, the composition is applied to the surface for 10 minutes to 60 minutes. In other embodiments, the composition is applied to the surface for 20 to 40 minutes. It is to be understood that all values and ranges between these values and ranges are encompassed by the methods of the present invention.

In some aspects, a pre-treatment solution including at least one of an activator complex, an active oxygen source, and a source of alkalinity, is applied to the surface for an amount of time sufficient to substantially penetrate a soil on the surface. In some embodiments, the pre-treatment solution is applied to the surface to be cleaned for 1 to 30 minutes. In some embodiments, the pretreatment solution is applied to the surface to be cleaned for 5 to 15 minutes. In some embodiments, the pre-treatment solution is applied to the surface for 10 minutes. It is to be understood that any value between these ranges is to be encompassed by the methods of the present invention.

In some aspects of the present invention, an override solution including at least one of an activator complex, an active oxygen source, and a source of alkalinity, is applied to a surface to be cleaned after a pre-treatment solution has been applied to the surface, i.e., there is no rinse step between the application of the pre-treatment solution and the override solution. In some embodiments, the override solution is applied to the surface for an amount of time sufficient to effectively clean the selected surface, and to activate the pre-treatment chemistry, e.g., generate oxygen gas. In some embodiments, the override solution is applied for 1 to 30 minutes. In some embodiments, the override use solution is applied for 5, 10, or 15 minutes. It is to be understood that all values and ranges between these values and rages are encompassed by the methods of the present invention.

### EXAMPLES

The present invention is more particularly described in the following examples that are intended as illustrations only. Unless otherwise noted, all parts, percentages, and ratios reported in the following examples are on a weight basis, and all reagents used in the examples were obtained, or are available, from the chemical suppliers described below, or may be synthesized by conventional techniques.

### Example 1 - Dairy Soil Removal Test

This experiment was run to determine the ability of the methods of the present invention to remove dairy soils from stainless steel surfaces. For this test, 316 stainless steel coupons (5cm X 10cm) were first cleaned and dried. 5 milliliters of condensed milk was applied to a rectangular area on the lower 2/3 of the coupons and allowed to dry for 24 hours. The soiled coupons were then used in two different tests: a beaker test, and a Cold Dairy Soil Test. The following solutions were prepared: (1) a 1% sodium hydroxide solution; (2) a mixture of 1% sodium hydroxide and 1% hydrogen peroxide; and (3) 1% hydrogen peroxide, and 100ppm activator complex (Mn catalyst), followed by a 1% sodium hydroxide override solution after 2 minutes.

For the Beaker Test, 750 milliliters of test solutions 1 and 3 were prepared at 110°F and placed on a stirring hot plate, with 350 rpm of stir bar agitation. The soiled coupons were placed into the beakers until one of the coupons appeared cleaned. The coupons were then removed from the beakers and photographed.

For the Cold Dairy Soil Test, 100 milliliters of each of the three test solutions were prepared at 35°C (95°F) and placed into a dip tester. The soiled coupons were hung above the solutions so that they would be completely submerged in the solutions during the test. The coupons were then cycled in and out of the solutions at a rate of 18 cycles per minute until one of the samples appeared cleaned. All of the coupons were cleaned for a total of 8 minutes. The coupons were then photographed.

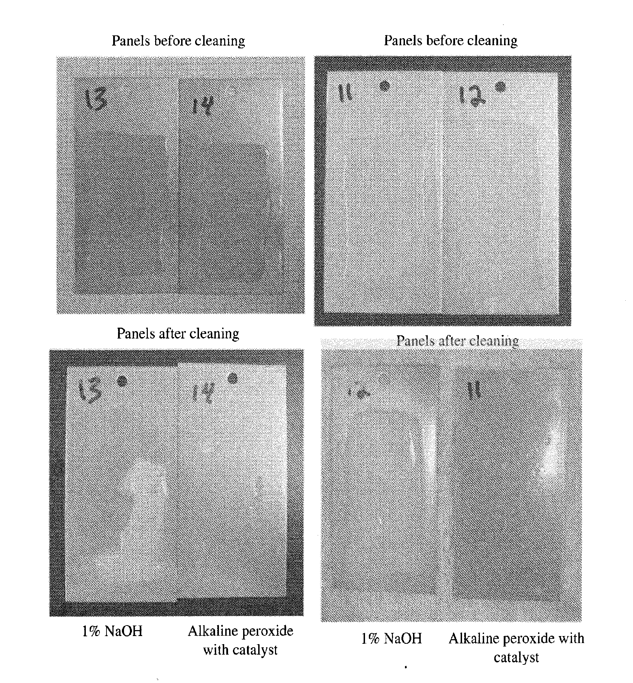

The results of the beaker test are shown in Figure 1. The coupons labeled 11, and 14 were cleaned using test solution 3 (1% hydrogen peroxide, and 100ppm activator complex (Mn catalyst), followed by a 1% sodium hydroxide override solution after 2 minutes). The coupons labeled 12 and 13 were cleaned using test solution 1 (1% sodium hydroxide solution). As can be seen in Figure 1, those coupons cleaned using the alkaline peroxide with catalyst solution (coupons 11 and 14) showed improved cleaning compared to those coupons cleaned using the caustic solution (coupons 12 and 13).

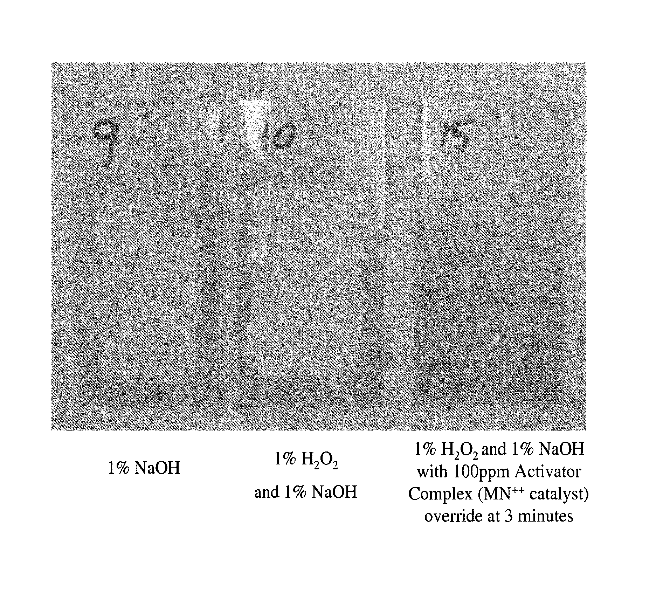

The results of the Cold Dairy Soil Test are shown in Figure 2. The coupon labeled 9 was cleaned using test solution 1, the coupon labeled 10 was cleaned using test solution 2, and the coupon labeled 15 was cleaned using the same components of test solution 3 (above) but in the following order: 1% hydrogen peroxide and 1% sodium hydroxide, followed by a 100ppm activator complex (Mn catalyst) override solution after 3 minutes. The lighter areas shown on the coupons are the soils that remained on the coupons after testing. As can be seen in Figure 2, coupon 15, cleaned with the alkaline peroxide catalyst system (test solution 3), showed improved cleaning when compared to the other solutions tested. Coupon 15 had substantially all of the soil removed, whereas coupons 9 and 10 appeared to have less than 25% of the soil removed after cleaning.

### Example 2 - Brewery Mash Soil Removal Test (Reference Example)

This experiment was run to determine the ability of the methods of the present invention to remove brewery mash soils from stainless steel surfaces. The trays were soiled using the following technique. Whole dried barley was added to boiling water. The barley/water mixture was removed from the heat, stirred, and allowed to sit for at least 1 hour. The mixture was then refrigerated overnight. 750 grams of the mixture was then placed in a large capacity blender with 100 milliliters of water, and blended on low until a fairly homogenous slurry was formed. Then, 25 grams of the slurry was placed into a clean stainless steel tray and distributed evenly across the surface of the tray. The tray was then placed into an oven at 80 - 85°C and baked for 3-5 hours.

The following test solutions were prepared: (1) 0.75 wt% sodium hydroxide, 0.4 wt% hydrogen peroxide, and 100ppm manganese sulfate as an activator complex (the "LT-CIP" solution); (2) 1.0 wt% sodium hydroxide solution; (3) 1 wt% nitric acid solution. The soiled trays were placed into 1000 milliliter beakers containing 1000 milliliters of one of the test solutions. The test solutions were tested at 20°C and at 40°C. The soiled trays were placed into the cleaning solutions for 30 minutes. At the end of 30 minutes, the treated trays were carefully removed, weighed, and photographed. The results are shown in the tables below.

**Table 1. Test Results at 20°C Cleaning**

| Test Solution | Temperature | Starting Weight (grams) | Final Weight (grams) | Tray Weight (grams) | Percent Soil Removal (%) | Average Soil Removal per Test Solution |
|---|---|---|---|---|---|---|
| LT-CIP | 20°C | 154.7 | 133.3 | 127.2 | 77.78% | 73.42% |
| LT-CIP | 20°C | 154.8 | 132.9 | 127.3 | 79.49% | |
| LT-CIP | 20°C | 154.09 | 136.8 | 126.6 | 62.98% | |
| NaOH (1%) | 20°C | 153.85 | 149 | 126.4 | 17.60% | 10.48% |
| NaOH (1%) | 20°C | 154.26 | 154.3 | 126.8 | 0.04% | |
| NaOH (1%) | 20°C | 154.8 | 151.0 | 127.3 | 13.82% | |
| Nitric Acid (1%) | 20°C | 153.95 | 142.8 | 126.5 | 40.51% | 37.35% |
| Nitric Acid (1%) | 20°C | 154.94 | 144.4 | 127.4 | 38.33% | |
| Nitric Acid (1%) | 20°C | 154.8 | 145.7 | 127.3 | 33.20% | |

**Table 2. Test Results at 40°C**

| Test Solution | Temperature | Starting Weight (grams) | Final Weight (grams) | Tray Weight (grams) | Percent Soil Removal (%) | Average Soil Removal per Test Solution |
|---|---|---|---|---|---|---|
| LT-CIP | 40°C | 153.9 | 132.3 | 126.4 | 78.62% | 80.55% |
| LT-CIP | 40°C | 154.94 | 133.2 | 127.4 | 79.24% | |
| LT-CIP | 40°C | 154.26 | 131.2 | 126.8 | 83.78% | |
| NaOH (1%) | 40°C | 153.92 | 154.3 | 126.4 | -1.27% | 1.21% |
| NaOH (1%) | 40°C | 154.8 | 153.8 | 127.3 | 3.82% | |
| NaOH (1%) | 40°C | 153.95 | 153.7 | 126.5 | 1.09% | |
| Nitric Acid (1%) | 40°C | 154.8 | 148.1 | 127.3 | 24.55% | 24.65% |
| Nitric Acid (1%) | 40°C | 154.09 | 147.1 | 126.6 | 25.42% | |
| Nitric Acid (1%) | 40°C | 153.85 | 147.3 | 126.4 | 24.00% | |

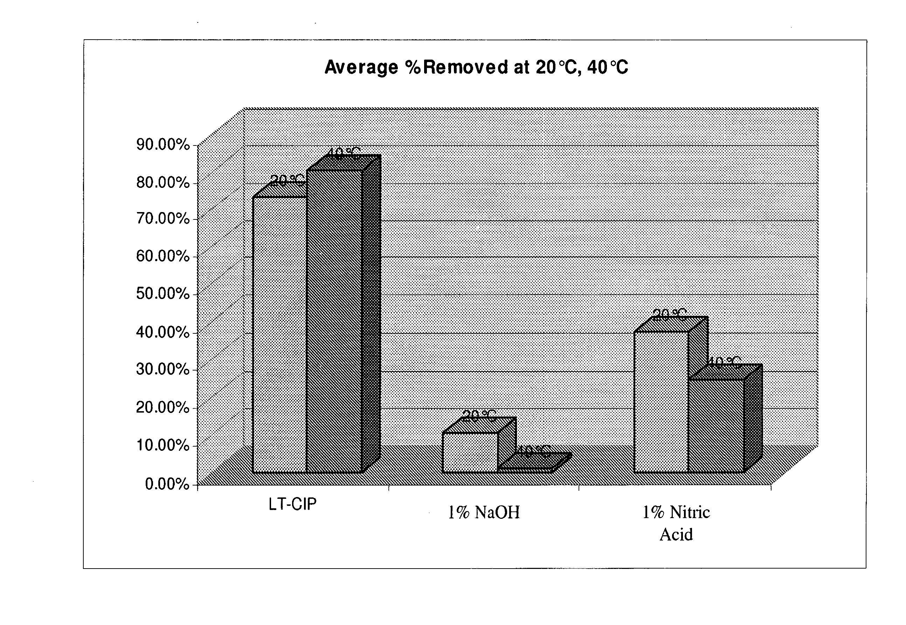

These results are also graphically depicted in Figure 3. As can be seen from the above tables, and Figure 3, the trays treated with the LT-CIP cleaning solutions had a much higher soil removal rate than those trays treated with the caustic or acid alone treatments.

### Example 3 - Low Temperature and Reduced Cleaning Chemistry Soil Removal Test (Reference Example)

A test was run to determine the difference between a heat activated CIP cleaning method, and an exemplary low temperature, reduced cleaning chemistry CIP cleaning method of the present invention. Trays were soiled with brewery mash soil as described above in Example 2. Two different cleaning methods were compared.

In the first cleaning method (method A), a soiled tray was placed in a 1000 milliliter beaker with a pretreatment solution of 0.5 wt% hydrogen peroxide, and 100ppm of an activator complex (manganese sulfate). After ten minutes, an alkaline override solution of 0.75wt% sodium hydroxide was added to the beaker.

In the second cleaning method (method B), a soiled tray was placed in a 1000 milliliter beaker with a 1.0% solution of an acidic pretreatment that included 74% hydrogen peroxide (35%) as the active oxygen source, and had no activator complex. After ten minutes, an alkaline override solution of 1.5% sodium hydroxide was added to the beaker.

Both of the cleaning methods were applied to the soiled trays for a total cleaning time of 30 minutes. The trays were then removed from the beakers, photographed, and weighed.

The results from this test are shown in the table below.

**Table 3.**

| | Method A | Method B |
|---|---|---|
| Original Weight (grams) | 156.45 | 157.54 |
| Tray Weight (grams) | 126.45 | 127.44 |
| Final Weight (grams) | 132.97 | 154.98 |
| Percent Soil Removed (%) | 78.27% | 8.20% |

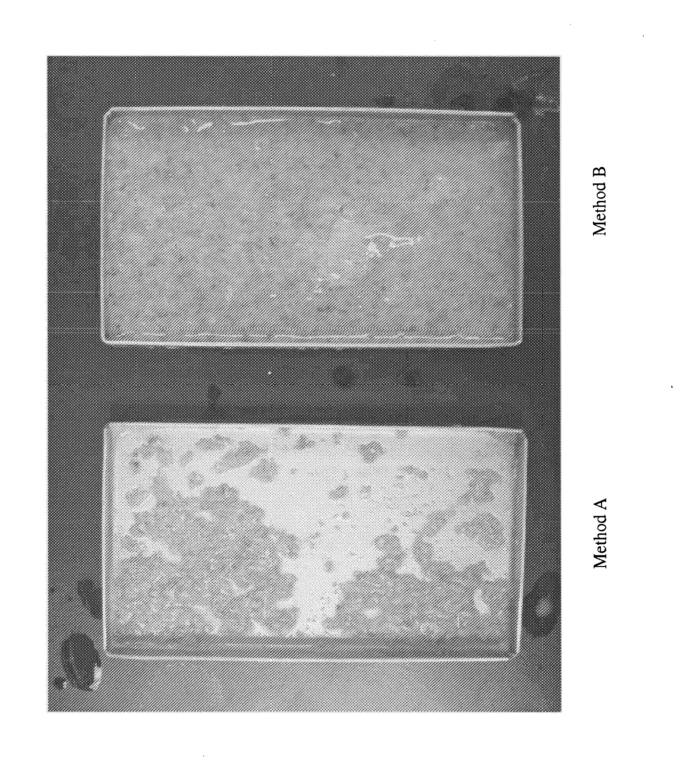

These results are also shown in Figure 4. In Figure 4, the tray cleaned using method A (the tray on the left) shows improved cleaning compared to the tray cleaned using method B (the tray on the right). The darker areas of the trays indicate remaining soil. The lighter areas are the tray itself, indicating soil removal in that area.

As can be seen from the results in Table 3, and Figure 4, the trays cleaned using an exemplary method A, showed a dramatic increase in soil removal compared to a comparative test method, method B. The increased soil removal was also achieved using 50% less cleaning chemistry than that used in the comparative method. Overall, the exemplary cleaning method of the present invention provided 70% more soil removal using half of the chemistry of the comparative chemistry.

To show that the activator complex is essential to driving soil removal at a reduced temperature, 100ppm of the activator complex (manganese sulfate) was added to the beaker used in method B after the tray was removed. It was observed that the solution immediately began to bubble. Foam also accumulated on the top of the solution. Bubbling and foaming was not observed during the test of method B without the catalyst present.

### Other Embodiments

It is to be understood that while the invention has been described in conjunction with the detailed description thereof, the foregoing description is intended to illustrate, and not limit the scope of the invention, which is defined by the scope of the appended claims. Other aspects, advantages, and modifications are within the scope of the following claims.

It is to be understood that wherever values and ranges are provided herein, all values and ranges encompassed by these values and ranges, are meant to be encompassed within the scope of the present invention. Moreover, all values that fall within these ranges, as well as the upper or lower limits of a range of values, are also contemplated by the present application.

## Claims

1. A method for removing soil from a surface using a clean in place process comprising applying to the surface a composition comprising:
(i) an activator complex;
(ii) a source of alkalinity; and
(iii) an active oxygen source;
wherein the composition is applied to the surface at a temperature of between 5°C and 50°C, wherein the activator complex comprises a transition metal complex, wherein the transition metal complex comprises a source of manganese ions, wherein the source of manganese ions is complexed with a gluconate composition.

2. The method of claim 1, wherein the source of manganese ions has an oxidation state selected from the group consisting of zero, two, three, four, seven and combinations thereof.

3. The method of claim 2, wherein the source of manganese ions is selected from the group consisting of manganese (II) sulfate, manganese (II) chloride, manganese (II) oxide, manganese (III) oxide, manganese (IV) oxide, manganese (II) acetate and mixtures thereof.

4. The method of claim 1, wherein the source of alkalinity is selected from the group consisting of basic salts, amines, alkanol amines, carbonates, silicates and mixtures thereof.

5. The method of claim 4, wherein the source of alkalinity comprises an alkali metal hydroxide, preferably sodium hydroxide.

6. The method of claim 1, wherein the active oxygen source comprises a peroxygen compound, preferably hydrogen peroxide.

7. The method of claim 1, wherein the pH of the composition is 11 to 14.

8. The method of claim 1, wherein the surface to be cleaned is selected from the group consisting of tanks, lines and processing equipment.

9. The method of claim 8, wherein the processing equipment is selected from the group consisting of a pasteurizer, a homogenizer, a separator, an evaporator, a filter, a dryer, a membrane, a fermentation tank, a cooling tank, and combinations thereof.

10. The method of claim 1, wherein the composition is applied to the surface to be cleaned for between 10 minutes and 60 minutes.

11. The method of claim 1, wherein the composition substantially degrades upon contact with a soil present on the surface to be cleaned.

12. The method of claim 1, wherein the composition comprises:
(i) about 50 to 200 parts per million activator complex;
(ii) about 0.25 wt% to 1.5wt% of the source of alkalinity; and
(iii) about 0.25 wt% to 1.0 wt % active oxygen source.

13. The method of claim 1, wherein the composition further comprises an additional functional ingredient selected from the group consisting of a low foam surfactant, a builder, a buffer, an antimicrobial composition, and combinations thereof.

14. The method of claim 13, wherein the surfactant is selected from the group consisting of alcohol alkoxylates, linear alkyl benzene sulfantes, alcohol sulfonates amine oxides, alkyl phenol ethoxylates, polyethylene glycol esters, EO/PO block copolymers and mixtures thereof.

15. The method of claim 1, wherein the composition comprises GRAS ingredients.

16. The method of claim 1, further comprising:
(b) reapplying the composition after it has been applied to the surface to be cleaned, wherein an additional unused active oxygen source is added to reapplied composition.

17. The method of claim 16, wherein the additional active oxygen source is added to the composition before the composition is reapplied to the surface; the additional active oxygen source is added to the composition substantially simultaneous with the reapplication of the composition to the surface; or the additional active oxygen source is added to the composition after the composition is reapplied to the surface.

## Patentansprüche

1. Verfahren zum Entfernen von Schmutz von einer Oberfläche unter Verwendung eines Clean-in-Place-Verfahrens umfassend Aufbringen einer Zusammensetzung umfassend:
(i) einen Aktivatorkomplex;
(ii) eine Quelle von Alkalinität; und
(iii) eine Quelle von aktivem Sauerstoff;
auf die Oberfläche, wobei die Zusammensetzung bei einer Temperatur zwischen 5 °C und 50 °C auf die Oberfläche aufgebracht wird, wobei der Aktivatorkomplex einen Übergangsmetallkomplex umfasst, wobei der Übergangsmetallkomplex eine Quelle von Mangan-Ionen umfasst, wobei die Quelle von Mangan-Ionen mit einer Gluconat-Zusammensetzung komplexiert ist.

2. Verfahren gemäß Anspruch 1, wobei die Quelle von Mangan-Ionen einen Oxidationszustand ausgewählt aus der Gruppe bestehend aus null, zwei, drei, vier, sieben und Kombinationen davon aufweist.

3. Verfahren gemäß Anspruch 2, wobei die Quelle von Mangan-Ionen ausgewählt ist aus der Gruppe bestehend aus Mangan(II)-sulfat, Mangan(II)-chlorid, Mangan(II)-oxid, Mangan(III)-oxid, Mangan(IV)-oxid, Mangan(II)-acetat und Gemischen davon.

4. Verfahren gemäß Anspruch 1, wobei die Quelle von Alkalinität ausgewählt ist aus der Gruppe bestehend aus basischen Salzen, Aminen, Alkanolaminen, Carbonaten, Silicaten und Gemischen davon.

5. Verfahren gemäß Anspruch 4, wobei die Quelle von Alkalinität ein Alkalimetallhydroxid umfasst, vorzugsweise Natriumhydroxid.

6. Verfahren gemäß Anspruch 1, wobei die Quelle von aktivem Sauerstoff eine Persauerstoffverbindung umfasst, vorzugsweise Wasserstoffperoxid.

7. Verfahren gemäß Anspruch 1, wobei der pH-Wert der Zusammensetzung 11 bis 14 beträgt.

8. Verfahren gemäß Anspruch 1, wobei die zu reinigende Oberfläche ausgewählt ist aus der Gruppe bestehend aus Tanks, Leitungen und Verarbeitungsausrüstung.

9. Verfahren gemäß Anspruch 8, wobei die Verarbeitungsausrüstung ausgewählt ist aus der Gruppe bestehend aus einem Pasteurisator, einem Homogenisator, einem Separator, einem Verdampfer, einem Filter, einem Trockner, einer Membran, einem Fermentationstank, einem Kühltank und Kombinationen davon.

10. Verfahren gemäß Anspruch 1, wobei die Zusammensetzung für zwischen 10 Minuten und 60 Minuten auf die zu reinigende Oberfläche aufgebracht wird.

11. Verfahren gemäß Anspruch 1, wobei sich die Zusammensetzung bei Kontakt mit einem auf der zu reinigenden Oberfläche vorhandenen Schmutz wesentlich zersetzt.

12. Verfahren gemäß Anspruch 1, wobei die Zusammensetzung umfasst:
(i) etwa 50 bis 200 Parts per Million an Aktivatorkomplex;
(ii) etwa 0,25 Gew.-% bis 1,5 Gew.-% an der Quelle von Alkalinität; und
(iii) etwa 0,25 Gew.-% bis 1,0 Gew.-% an einer Quelle von aktivem Sauerstoff.

13. Verfahren gemäß Anspruch 1, wobei die Zusammensetzung ferner einen zusätzlichen funktionellen Inhaltsstoff ausgewählt aus der Gruppe bestehend aus einem schaumarmen grenzflächenaktiven Mittel, einem Aufbaumittel, einem Puffer, einer antimikrobiellen Zusammensetzung und Kombinationen davon umfasst.

14. Verfahren gemäß Anspruch 13, wobei das grenzflächenaktive Mittel ausgewählt ist aus der Gruppe bestehend aus Alkoholalkoxylaten, linearen Alkylbenzolsulfanten, Alkoholsulfonaten, Aminoxiden, Alkylphenolethoxylaten, Polyethylenglycolestern, EO/PO-Blockcopolymeren und Gemischen davon.

15. Verfahren gemäß Anspruch 1, wobei die Zusammensetzung GRSA-Inhaltsstoffe umfasst.

16. Verfahren gemäß Anspruch 1, ferner umfassend:
(b) erneutes Aufbringen der Zusammensetzung, nachdem sie auf die zu reinigende Oberfläche aufgebracht worden ist, wobei eine zusätzliche nichtverwendete Quelle von aktivem Sauerstoff zu der erneut aufgebrachten Zusammensetzung zugegeben wird.

17. Verfahren gemäß Anspruch 16, wobei die zusätzliche Quelle von aktivem Sauerstoff zu der Zusammensetzung zugegeben wird, bevor die Zusammensetzung erneut auf die Oberfläche aufgebracht wird; die zusätzliche Quelle von aktivem Sauerstoff im Wesentlichen gleichzeitig mit dem erneuten Aufbringen der Zusammensetzung auf die Oberfläche zu der Zusammensetzung zugegeben wird; oder die zusätzliche Quelle von aktivem Sauerstoff zu der Zusammensetzung zugegeben wird, nachdem die Zusammensetzung erneut auf die Oberfläche aufgebracht worden ist.

## Revendications

1. Procédé d'élimination de la salissure d'une surface au moyen d'un processus de nettoyage sur place comprenant l'application sur la surface d'une composition comprenant :
(i) un complexe activateur ;
(ii) une source d'alcalinité ; et
(iii) une source d'oxygène actif ;
dans lequel la composition est appliquée sur la surface à une température comprise entre 5 °C et 50 °C, le complexe activateur comprenant un complexe de métal de transition, le complexe de métal de transition comprenant une source d'ions manganèse, la source d'ions manganèse étant complexée avec une composition de gluconate.

2. Procédé de la revendication 1, dans lequel la source d'ions manganèse a un état d'oxydation choisi dans le groupe constitué de zéro, deux, trois, quatre, sept et des combinaisons de ceux-ci.

3. Procédé de la revendication 2, dans lequel la source d'ions manganèse est choisie dans le groupe constitué des sulfate de manganèse (II), chlorure de manganèse (II), oxyde de manganèse (II), oxyde de manganèse (III), oxyde de manganèse (IV), acétate de manganèse (II) et des mélanges de ceux-ci.

4. Procédé de la revendication 1, dans lequel la source d'alcalinité est choisie dans le groupe constitué de sels basiques, amines, alcanolamines, carbonates, silicates et de mélanges de ceux-ci.

5. Procédé de la revendication 4, dans lequel la source d'alcalinité comprend un hydroxyde de métal alcalin, de préférence l'hydroxyde de sodium.

6. Procédé de la revendication 1, dans lequel la source d'oxygène actif comprend un composé de peroxygène, de préférence le peroxyde d'hydrogène.

7. Procédé de la revendication 1, dans lequel le pH de la composition est de 11 à 14.

8. Procédé de la revendication 1, dans lequel la surface à nettoyer est choisie dans le groupe constitué de cuves, revêtements et équipement de traitement.

9. Procédé de la revendication 8, dans lequel l'équipement de traitement est choisi dans le groupe constitué d'un pasteurisateur, un homogénéisateur, un séparateur, un évaporateur, un filtre, un séchoir, une membrane, une cuve de fermentation, une cuve de refroidissement, et des combinaisons de ceux-ci.

10. Procédé de la revendication 1, dans lequel la composition est appliquée sur la surface à nettoyer pendant une durée comprise entre 10 minutes et 60 minutes.

11. Procédé de la revendication 1, dans lequel la composition se dégrade sensiblement après contact avec une salissure présente sur la surface à nettoyer.

12. Procédé de la revendication 1, dans lequel la composition comprend :
(i) environ 50 à 200 parties par million de complexe activateur ;
(ii) environ 0,25 % en poids à 1,5 % en poids de la source d'alcalinité ; et
(iii) environ 0,25 % en poids à 1,0 % en poids de source d'oxygène actif.

13. Procédé de la revendication 1, dans lequel la composition comprend en outre un composant fonctionnel additionnel choisi dans le groupe constitué d'un tensioactif faiblement moussant, un adjuvant, un tampon, une composition antimicrobienne, et des combinaisons de ceux-ci.

14. Procédé de la revendication 13, dans lequel le tensioactif est choisi dans le groupe constitué d'alcoxylates d'alcool, (alkyle linéaire)-benzènesulfates, sulfonates d'alcool, oxydes d'amine, éthoxylates d'alkylphénol, esters de polyéthylène glycol, copolymères séquencés EO/PO et des mélanges de ceux-ci.

15. Procédé de la revendication 1, dans lequel la composition comprend des composants GRAS.

16. Procédé de la revendication 1, comprenant en outre :
(b) la réapplication de la composition après avoir été appliquée sur la surface à nettoyer, dans laquelle une source d'oxygène actif additionnelle inutilisée est ajoutée à la composition réappliquée.

17. Procédé de la revendication 16, dans lequel la source d'oxygène actif additionnelle est ajoutée à la composition avant que la composition soit réappliquée sur la surface ; la source d'oxygène actif additionnelle est ajoutée à la composition de façon sensiblement simultanée avec la réapplication de la composition sur la surface ; ou la source d'oxygène actif additionnelle est ajoutée à la composition après que la composition soit réappliquée sur la surface.
